# EUROPEAN PATENT SPECIFICATION

(11) **EP 3 780 550 B1**
(45) Date of publication and mention of the grant of the patent: **01.11.2023**
(21) Application number: 18929166.9
(22) Date of filing: 11.12.2018
(51) Int. Cl.: H04L 67/55, H04L 67/12, G06V 40/16

(54) **INFORMATION PUSHING METHOD AND DEVICE**
VERFAHREN UND VORRICHTUNG ZUM PUSHING VON INFORMATIONEN
PROCÉDÉ ET DISPOSITIF DE DISTRIBUTION SÉLECTIVE D'INFORMATIONS

(30) Priority: 10.08.2018 CN 201810910970
(43) Date of publication of application: 17.02.2021
(73) Proprietor: Gree Electric Appliances, Inc. of Zhuhai, Zhuhai, Guangdong 519070 (CN)
(72) Inventor: WANG, Zi, Zhuhai, Guangdong 519070 (CN); LI, Shaobin, Zhuhai, Guangdong 519070 (CN); LIANG, Bo, Zhuhai, Guangdong 519070 (CN); CHEN, Yanyu, Zhuhai, Guangdong 519070 (CN); MAO, Yuehui, Zhuhai, Guangdong 519070 (CN); JIA, Jutao, Zhuhai, Guangdong 519070 (CN)
(74) Representative: Appleyard Lees IP LLP
(86) International application number: PCT/CN2018/120367
(87) International publication number: WO 2020/029496

(56) References cited:
- WO-A1-2018/113526
- CN-A- 103 944 598
- CN-A- 104 679 839
- CN-A- 105 872 685
- CN-A- 107 105 322
- US-A1- 2017 093 999

## Description

### TECHNICAL FIELD

The present invention relates to the field of communication, and particularly relates to an information push method and apparatus.

### BACKGROUND

In related technologies, currently there are more and more voice identification products. With development of the technology and increasement in popularity, users gradually accept and approve such interactive mode. In the field of smart home, voice identification is mostly used for device control, but as the usage frequency of a user increases, a single control function can no longer meet the requirements, and it is necessary to provide more service contents to enhance the user experience.

As for a problem that the service content cannot be displayed to the user when an interaction without a screen is performed in related technologies, there is no effective solution at present.

The document CN107105322A discloses a multimedia smart push robot and push method. The push robot includes a push terminal, a data server and a control server. The control server is configured to store user information and user history on-demand information. The data server is configured to store local multimedia files and collecting pushed multimedia composed of multimedia files from the Internet. The push terminal is configured to establish an interest model for interests of a user according to the information stored by the control server and the multimedia data stored by the data server, combine the multimedia according to interest indexes in the interest model, push the combined multimedia to the user and pushing corresponding multimedia according to instruction information of the user.

The document US2017/093999A1 discloses that some implementations allow users to create and share data including playlists. Such playlists may be subscribed to by other users. Changes to such playlists, such as updates by the curator of the playlist, must be propagated to subscribers in a timely manner while efficiently utilizing resources. Some implementations allow updates to be propagated using a push notification to cause client devices to request the update. Alternatively, updates may be made when the client devices of the subscribers next accesses the system. An aggregator system may be used to make decisions on which users to send push notifications, and which users to wait to pull updates on their own. Additionally, the aggregator may determine that certain playlist updates should be distributed using push notifications, the aggregator may determine that only certain playlist subscribers should receive push notifications regarding playlist updates.

### SUMMARY

The present invention provides an information push method and apparatus, to at least address the technical problem that a service content cannot be displayed to a user during an interaction without a screen in related technologies. The invention is related to a method according to claim 1, an apparatus according to claim 7, a computer readable storage media according to claim 8 and a computer program run on an electronic device according to claim 9. Further embodiments of the invention are defined by the dependent claims.

Through the present invention, the voice information and facial feature information from the target object are received, the first content in the voice information is identified, the target object corresponding to the facial feature information is determined, the second content consistent with the first content is determined and is pushed to the target object. By using the above technical solution, the target object is found out by performing a facial feature identification. Even if the current device identifying the facial feature information is interactive without a screen, the content requested by the target object can also be displayed, thereby solving the problem that the service content cannot be displayed to the user during the interaction without a screen in related technologies, ensuring timely push of information, increasing a range of use of no-screen devices, and improving the user experience.

### BRIEF DESCRIPTION OF THE DRAWINGS

The accompanying drawings described herein are used for providing a further understanding of the present invention and constitute a part of the present invention. The exemplary embodiments of the present invention and the description thereof are used for explaining the present invention rather than constituting any improper limitation on the present invention. In the drawings:
FIG 1 is hardware structure block diagram of a computer terminal applying an information push method according to some embodiments of the present invention;
FIG 2 is a flow chart showing an information push method according to some embodiments of the present invention;
FIG 3 is a flow chart showing a voice interaction method based on a facial identification according to the present invention; and
FIG 4 is an operation flow chart showing an information push method based on a facial identification according to the present invention.

### DETAILED DESCRIPTION

The present invention will be described in detail with reference to the accompanying drawings and in conjunction with the embodiments. It should be noted that the embodiments in the invention and the features in the embodiments can be combined with each other if there is no conflict.

It should be noted that terms "first", "second", and so on in the description, claims and the above-mentioned drawings in the present invention are used for distinguishing similar objects, but are not definitely used for describing a particular order or sequence.

### Embodiment one

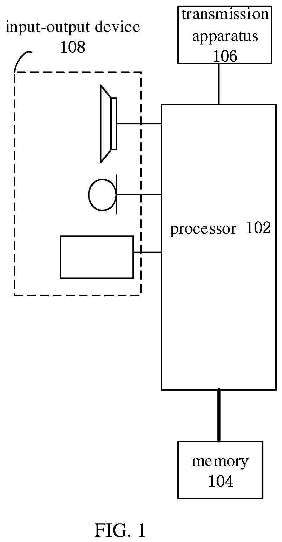

The method embodiment provided by the embodiment one of the present invention can be executed in a computer terminal or a similar computing device. Computation is performed on a computer terminal as an example, FIG 1 is a hardware structure block diagram of a computer terminal applying an information push method according to an embodiment of the present invention. As shown in FIG 1, the computer terminal 10 can include one or more processors 102 (FIG 1 only shows one processor; the processor 102 can include, but is not limited to, a processing device such as a microprocessor MCU or a programmable logic device FPGA, and the like) and a memory 104 configured to store data. Optionally, the above-mentioned computer terminal can further include a transmission apparatus 106 and an input-output device 108 configured to have a communication function. A person of ordinary skill in the art can understand that the structure shown in FIG 1 is only for illustration, which does not limit the structure of the above-mentioned computer terminal. For example, the computer terminal 10 can also include more or less components than those shown in FIG 1, or have a different configuration from that shown in FIG 1.

The memory 104 can be configured to store a software program and a module of application software, such as a program instruction/module corresponding to an information push method in the embodiments of the present invention. The processor 102 performs various function applications and data processing by running the software program and modules stored in the memory 104, to implement the above-mentioned method. The memory 104 may include a high-speed random access memory, and can further include a non-transitory memory, such as one or more magnetic storage devices, a flash memory, or other non-transitory solid-state memory. In some examples, the memory 104 can further include a memory remotely provided with respect to the processor 102, and the remote memory can be connected to the computer terminal 10 through a network. Examples of the network include, but are not limited to, the Internet, an Intranet, a local area network, a mobile communication network, and a combination thereof.

The transmission apparatus 106 is configured to receive or transmit data through a network. The above-mentioned specific examples of the network may include a wireless network provided by a communication provider of the computer terminal 10. In some examples, the transmission apparatus 106 includes a Network Interface Controller (NIC) which can be connected to other network devices through a base station so as to communicate with the Internet. In examples, the transmission apparatus 106 can be a radio frequency (RF) module, which is configured to communicate with the Internet in a wireless mode.

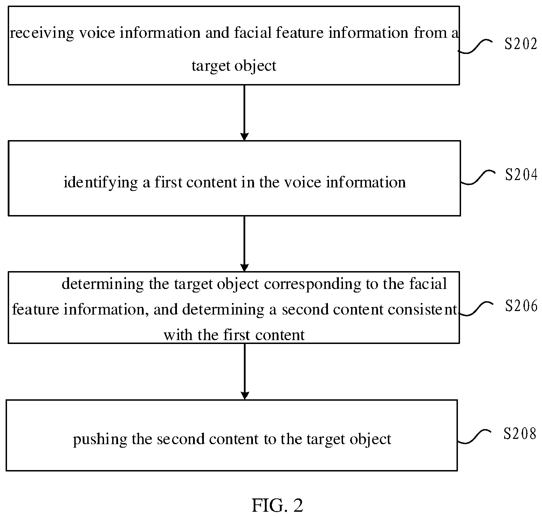

In some embodiments, an information push method performed on the above-mentioned computer terminal is provided. FIG 2 is a flow chart showing an information push method according to some embodiments of the present invention. As shown in FIG 2, the process includes the following steps.

Step S202: voice information and facial feature information of a target object are received.

Step S204: a first content in the voice information is identified.

Step S206: a target object corresponding to the facial feature information and a second content consistent with the first content are determined.

The determined second content consistent with the first content can be obtained from a local storage, such as a user manual, etc., or can be obtained from a network side, such as news and other information.

Step S208: the second content is pushed to the target object.

Through the above steps, the voice information and facial feature information of the target object are received, the first content in the voice information is identified, the target object corresponding to the facial feature information is determined, the second content consistent with the first content is determined and is pushed to the target object. By using the above technical solution, the target object is found out by performing a facial feature identification. Even if the current device identifying the facial feature information is interactive without a screen, the content requested by the target object can also be displayed, thereby solving the problem that the service content cannot be displayed to the user during the interaction without a screen in related technologies, ensuring timely push of information, increasing a range of use of no-screen devices, and improving user experience.

Optionally, the specified orders of the step "an identity of a target object corresponding to the facial feature information is determined" and the step "a second content consistent with the first content is determined" in the above step 206 are interchangeable, which are not limited here.

Optionally, the step of receiving the voice information and facial feature information of the target object includes: the facial feature information is acquired when the voice information is received and it is determined that the voice information at least includes a wake-up word. The wake-up word can be a word preset by the system to wake up the device. For example, the wake-up words of an air-conditioner can be "My Gree Air-Conditioner", the air-conditioner is started by using the wake-up words, and then the user instruction is received or the facial feature information of the target object is acquired.

Optionally, the step of determining the target object corresponding to the facial feature information includes: a feature identification is performed on the facial feature information of the target object to identify the target object corresponding to the facial feature information.

Optionally, after the feature identification is performed on the facial feature information of the target object, in a case where an identity of the target object corresponding to the facial feature information is not found out, prompt information is output; the prompt information is set to prompt to perform a face registration and/or an identity binding. In a case where the identity of the target object is still not determined after the facial identification, it may be that the target object does not perform the face registration, or is not bound to the identity, for example, a WeChat account number is bound to.

The identity in the embodiment of the present invention may be an account number, such as a WeChat account number or a Weibo account number. The target object, such as a user, is determined through the facial identification, and then the WeChat account number of the user is found out, and then a requested or associated content in the voice message is pushed to the WeChat account number. Previously, a corresponding relationship between facial feature information and the target object can be established, and then the target object has a corresponding identity; alternatively, the corresponding relationship can be directly between the facial feature information and the identity.

Optionally, the step of pushing the second content to the target object includes: the second content is pushed to a terminal on which the identity of the target object is logged in. For example, when a current device performing identifications of the voice collection and the facial feature information interacts without a screen, the information requested by the target object through the voice information is pushed to the terminal on which the WeChat account number of the target object is logged in.

Optionally, after the voice information and facial feature information of the target object are received, voiceprint processing is performed on the voice information, and a first target object corresponding to the processed voiceprint information is determined; a second target object corresponding to the facial feature information is determined; in the case where the first target object is the same as the second target object, a second content corresponding to the voice information is pushed to the first target object. The embodiment provides a mode to verify the identity of the target object. Through the identifications of the voice information and the facial feature information, when identification results of the above two identifications are consistent, it is determined that the identity of the target object passes a security verification, meanwhile a unilateral detection error is prevented, thereby enhancing the security and accuracy of push.

An information push method according to the present invention includes the following steps:
step 1: voice information and facial feature information of a target object are received;
step 2: a first content in the voice information is identified;
step 3: a second content consistent with the first content is determined after detecting a target object corresponding to the facial feature information;
step 4: the second content is pushed to the target object.

In the above technical solution, the voice information and facial feature information of the target object are received, the first content in the voice information is identified, and after the target object corresponding to the facial feature information is detected, the second content consistent with the first content is determined and is pushed to the target object. By using the above technical solution, the target object is found out by performing the facial feature identification, even if the current device performing the identification of the facial feature information is interactive without a screen, the content requested by the target object can also be transmitted to the terminal corresponding to the target object to display, thereby solving the problem that the service content cannot be displayed to the user during interaction without a screen in related technologies, ensuring the timely push of information, increasing the range of use of no-screen devices, and improving the user experience.

Hereinafter, the present invention will be illustrated in conjunction with another embodiment of the present invention.

The present invention is based on the facial identification technology, the corresponding bound account number is found out by identifying a face and matching the face with a registered face, then the information is pushed to the corresponding user, and the service content requested by the user is pushed to the user through a message mode, thereby solving the problem of single or limited service.

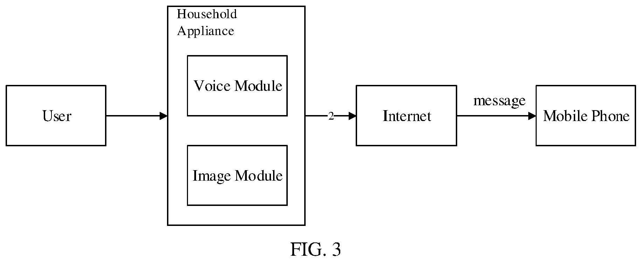

FIG 3 is a flow chart of a voice interaction method based on a facial identification according to the present invention. As shown in FIG 3, the user transmits a voice to a household appliance and performs the facial identification, a voice module of the household appliance acquires voice information of the user, and an image module of the household appliance obtains facial feature information of the user through a camera or other devices, and then the household appliance identifies the above information or uploads the information to the Internet for identification; after the content to be pushed is determined, the content is transmitted to the mobile phone on which the identity of the user is logged in.

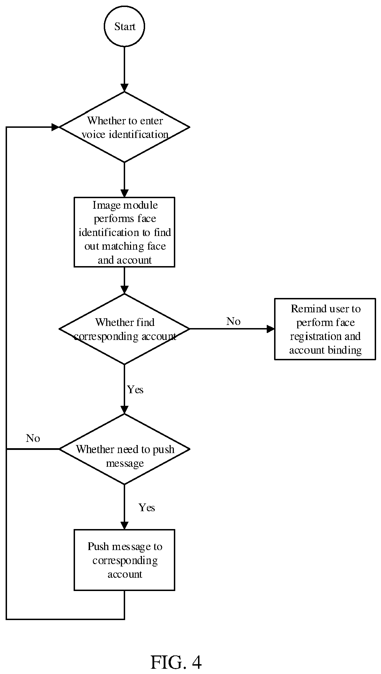

FIG 4 is an operation flow chart of an information push method based on a facial identification according to the present invention, as shown in FIG 4, including the following steps.

Step 1: a wake-up word is received, and it is determined whether to enter a voice identification according to the wake-up word.

The user needs to perform the face registration and account number binding before use, specifically, the user uses a mobile application (APP) to register an account number, the voice device is connected to the Internet through distribution network, and the account number is bound to the household appliance; at the same time, the user can associate with a third-party account number, such as WeChat, QQ, Weibo, etc., through the account number. The face registration is activated through the APP of the logged-in account number of the user. During the activation, the user himself needs to collect a face through the mobile phone, and the APP performs the face registration with the collected face of the user.

Step 2: the image module performs the facial identification and finds out a matching face and account number.

Step 3: it is determined whether the corresponding account number is found out; When the corresponding account number is found out, the process turns to step 5; when the corresponding account number is not found out, the process turns to step 4.

Step 4: when the corresponding account number is not found out, the user is reminded to perform the face registration and account number binding.

Step 5: when the corresponding account number is found out, it is determined whether a message needs to be pushed to the account number; when it is determined that the message needs to be pushed, the process turns to step 6; when it is determined that no message needs to be pushed, the process returns to the step 1.

Step 6: information is pushed to the corresponding account number.

By using the above technical solution, when the user uses the household appliance to perform the voice identification and meanwhile the image module performs facial identification authentication through the camera, it is detected whether there are a matching face and a corresponding account number, and if there are the matching face and the corresponding account number and message push is involved, the message is pushed to an APP of the corresponding account number, or a third-party APP associated with the account number, such as WeChat and so on.

Through the description of the above embodiments, those skilled in the art can clearly understand that the method in the above embodiment can be implemented by means of software plus the necessary general hardware platform, or implemented by hardware, but in many cases the former is a better implementation mode. Based on the above understanding, the technical solution of the present invention essentially or the part that contributes to the existing technology can be embodied in the form of a software product, and the computer software product is stored in a storage medium (such as ROM/RAM, a magnetic disk, an optical disc), and includes several instructions for enabling one terminal device (which can be a mobile phone, a computer, a server, or a network device, etc.) to perform the method described in each embodiment of the present invention.

### Embodiment two

In the embodiment, an information push apparatus is further provided, which is configured to implement the above-mentioned embodiments and preferred implementations, and what has been described will not be repeated. As used below, the term "module" can be a combination of software and/or hardware with a predetermined function. Although the apparatuses described in the following embodiments are preferably implemented by software, hardware or a combination of software and hardware are also possible and can be conceived.

According to another embodiment of the present invention, an information push apparatus is further provided, which includes:
a first receiving module, configured to receive voice information and facial feature information of a target object;
a first identification module, configured to identify a first content in the voice information;
a first determination module, configured to determine a target object corresponding to the facial feature information, and determine a second content consistent with the first content;
a first push module, configured to push the second content to the target object.

Optionally, the apparatus can be applied to an air conditioner or other devices. The air conditioner can interact with the user without a screen. The interaction without a screen in the present invention is not limited to no screen in the absolute sense, that is, the air conditioner may have no screen, or only have one screen displaying a temperature but not news.

In the above technical solution, the voice information and the facial feature information of the target object are received, the first content in the voice information is identified, the target object corresponding to the facial feature information is determined, the second content consistent with the first content is determined and pushed to the target object. By using the above technical solution, the target object is found out by performing the facial feature identification; even if the current device performing the identification of the facial feature information interacts without a screen, the content requested by the target object can also be displayed, thereby solving the problem that the service content cannot be displayed to the user during the interaction without a screen in related technologies, ensuring the timely push of information, increasing the range of use of no-screen devices, and improving the user experience.

Optionally, the first receiving module is further configured to acquire the facial feature information when receiving the voice information and determining that the voice information at least includes a wake-up word. The wake-up word can be a word preset by the system to wake up the device. For example, the wake-up words of the air conditioner can be "My Gree Air Conditioner", and the air conditioner is started by the wake-up word and then receives the instruction of the user.

Optionally, the first identification module is configured to perform a feature identification on the facial feature information of the target object, and identify a target object corresponding to the facial feature information.

Optionally, the first determination module is configured to output prompt information after performing the feature identification on the facial feature information of the target object and if an identity of the target object corresponding to the facial feature information is not found out; the prompt information is set to prompt to perform a face registration and/or identity binding. In the case where the identity of the target object is still not determined after the facial identification, it may be that the target object does not perform the face registration, or is not bound to the identity, for example, the WeChat account number is bound to.

Optionally, the first push module is configured to push the second content to a terminal on which the identity of the target object is logged in. For example, when the current device performing the identifications of the voice collection and the facial feature information is interactive without a screen, the information requested by the target object through the voice information is pushed to the terminal on which the WeChat account number of the target object is logged in.

Optionally, after receiving the voice information and the facial feature information of the target object, the first receiving module is further configured to: perform voiceprint processing on the voice information and determine a first target object corresponding to processed voiceprint information; determine a second target object corresponding to the facial feature information; and push a second content corresponding to the voice information to the first target object if the first target object is the same as the second target object. The embodiment provides a mode to verify the identity of the target object. Through the identifications of the voice information and the facial feature information, when the identification results of the two identifications are consistent, it is determined that the identity of the target object passes the security verification, meanwhile a unilateral detection error is prevented, thereby enhancing the security and accuracy of the push.

According to another embodiment of the present invention, an information push apparatus if further provided, which includes:
a second receiving module, configured to receive voice information and facial feature information of a target object;
a second identification module, configured to identify a first content in the voice information;
a second determination module, configured to determine a second content consistent with the first content after detecting a target object corresponding to the facial feature information;
a second push module, configured to push the second content to the target object.

In the above technical solution, the voice information and the facial feature information of the target object are received, the first content in the voice information is identified, and after the target object corresponding to the facial feature information is detected, the second content consistent with the first content is determined and pushed to the target object. By using the above technical solution, the identity of the target object is found out by performing the facial feature identification; even if the current device performing the identification of the facial feature information interacts without a screen, the content requested by the target object can also be displayed, thereby solving the problem that the service content cannot be displayed to the user during the interaction without a screen in related technologies, ensuring the timely push of the information, increasing the range of use of no-screen devices, and improving the user experience.

It should be noted that each of the above modules can be implemented by the software or hardware. The latter can be implemented by, but not limited to, the following mode: the above modules are all located in the same processor; or, the above modules are located in different processors in any combination.

### Embodiment three

The embodiment of the present invention further provides a storage medium. Optionally, in the embodiment, the above-mentioned storage medium may be configured to store program codes performing the following steps of:
S1, receiving voice information and facial feature information of a target object;
S2: identifying a first content in the voice information;
S3: determining a target object corresponding to the facial feature information, and determining a second content consistent with the first content;
S4: pushing the second content to the target object.

Optionally, in the embodiment, the above-mentioned storage medium may include, but is not limited to, various media that can store program codes, such as a U disk, a Read-Only Memory (ROM), a Random Access Memory (RAM), a mobile hard disk, a magnetic disk or an optical disk, etc.

The embodiments of the present invention also provide an electronic apparatus including a processor and a memory storing a computer program, the processor is configured to run the computer program to execute the steps in any of the foregoing method embodiments.

Optionally, the aforementioned electronic apparatus may further include a transmission apparatus and an input-output device; the transmission apparatus is connected to the aforementioned processor, and the input-output device is connected to the aforementioned processor.

Optionally, in the embodiment, the aforementioned processor can be configured to, through a computer program, execute the following steps of:
S1: receiving voice information and facial feature information of a target object;
S2: identifying a first content in the voice information;
S3: determining a target object corresponding to the facial feature information, and determining a second content consistent with the first content;
S4: pushing the second content to the target object.

Optionally, for specific examples in the embodiment, reference may be made to the examples described in the above-mentioned embodiments and optional implementations, and details are not repeated herein again in the embodiment.

Optionally, for specific examples in the embodiment, reference may be made to the examples described in the above-mentioned embodiments and optional implementations, and details are not repeated herein again in the embodiment.

Apparently, those skilled in the art should understand that the above-mentioned modules or steps in the invention can be implemented by a general computing device, which can be concentrated on a single computing device or distributed in a network composed of multiple computing devices. Optionally, these modules and steps can be implemented by program codes executable by the computing device, so that they can be stored in the storage device and executed by the computing device. In some cases, steps shown or described can be performed in different orders than here, or these steps are respectively made into various integrated circuit modules, or multiple modules or steps of them are made into a single integrated circuit module to implement. In such a way, the present application is not limited to any specific combination of a hardware and software.

The above-mentioned descriptions are merely preferred embodiments of the present invention, and are not intended to limit the invention. For those skilled in the art, the present invention can have various modifications and variations within the protection scope of the present application as established by the appended set of claims.

### Industrial applicability

In the above-mentioned technical solution provided by the present invention, a target object is found out by performing a facial feature identification, a requested content corresponding to voice information is transmitted to a terminal or mobile terminal of the target object; even if the current device performing the identification of the facial feature information interacts without a screen, the requested content of the target object can also be displayed, thereby solving the problem that the service content cannot be displayed to the user during the interaction without a screen in related technologies, ensuring the timely push of information, and increasing a range of use of no-screen devices, and improving user experience.

## Claims

1. An information push method, comprising:
receiving (S202) voice information and facial feature information of a target object;
identifying (S204) a first content in the voice information;
determining (S206) the target object corresponding to the facial feature information, and determining a second content consistent with the first content;
pushing (S208) the second content to the target object;
further comprising:
after receiving the voice information and the facial feature information of the target object,
performing voiceprint processing on the voice information, and
when determining the target object corresponding to the facial feature information comprising:
determining a first target object corresponding to processed voiceprint information;
determining a second target object corresponding to the facial feature information; and wherein pushing the second content to the target object comprises pushing the second content corresponding to the voice information to the second target object in a case where the first target object is the same as the second target object.

2. The method according to claim 1, wherein the receiving the voice information and the facial feature information of the target object comprises:
acquiring the facial feature information when receiving the voice information and determining that the voice information at least comprises a wake-up word.

3. The method according to claim 1, wherein the determining the target object corresponding to the facial feature information comprises:
performing a feature identification on the facial feature information of the target object, and identifying the target object corresponding to the facial feature information.

4. The method according to claim 3, further comprising:
after performing the feature identification on the facial feature information of the target object,
outputting prompt information in a case where an identity of the target object corresponding to the facial feature information is not found out, wherein the prompt information is set to prompt to perform a face registration and/or an identity binding.

5. The method according to claim 1, wherein the pushing the second content to the target object comprises:
pushing the second content to a terminal on which an identity of the target object is logged in.

6. The method according to claim 4, wherein the identity of the target object is an account number.

7. An information push apparatus, comprising:
a first receiving module, configured to receive voice information and facial feature information of a target object;
a first identification module, configured to identify a first content in the voice information;
a first determination module, configured to determine the target object corresponding to the facial feature information, and determine a second content consistent with the first content;
a first push module, configured to push the second content to the target object;
wherein the first identification module is further configured to perform voiceprint processing on the voice information;
the first determination module, when determining the target object corresponding to the facial feature information, is further configured to determine a first target object corresponding to processed voiceprint information, and determine a second target object corresponding to the facial feature information;
the first push module, when pushing the second content to the target object, is further configured to push the second content corresponding to the voice information to the second target object in a case where the first target object is the same as the second target object.

8. A storage medium storing a computer program which, when executed, is configured to execute the method of any one of claims 1 to 7.

9. A computer program which run by the processor (102) of an electronic apparatus performs the method of any one of claims 1 to 7.

## Patentansprüche

1. Informations-Push-Verfahren, umfassend
Empfangen (S202) von Sprachinformationen und Gesichtsmerkmalinformationen eines Zielobjekts;
Identifizieren (S204) eines ersten Inhalts in den Sprachinformationen;
Bestimmen (S206) des Zielobjekts, das den Gesichtsmerkmalinformationen entspricht, und Bestimmen eines zweiten Inhalts, der mit dem ersten Inhalt übereinstimmt;
Pushen (S208) des zweiten Inhalts zu dem Zielobjekt; ferner umfassend:
nach dem Empfangen der Sprachinformationen und der Gesichtsmerkmalinformationen des Zielobjekts,
Durchführen einer Sprachabdruckverarbeitung bei den Sprachinformationen, und
beim Bestimmen des Zielobjekts, das den Gesichtsmerkmalinformationen entspricht, umfassend:
Bestimmen eines ersten Zielobjekts, das den verarbeiteten Sprachabdruckinformationen entspricht;
Bestimmen eines zweiten Zielobjekts, das den Gesichtsmerkmalinformationen entspricht; und
wobei das Pushen des zweiten Inhalts zu dem Zielobjekt das Pushen des zweiten Inhalts, der den Sprachinformationen entspricht, zu dem zweiten Zielobjekt in einem Fall umfasst, in dem das erste Zielobjekt das gleiche ist wie das zweite Zielobjekt.

2. Verfahren nach Anspruch 1, wobei das Empfangen der Sprachinformationen und der Gesichtsmerkmalinformationen des Zielobjekts umfasst:
Erfassen der Gesichtsmerkmalinformationen beim Empfangen der Sprachinformationen und Bestimmen, dass die Sprachinformationen zumindest ein Weckwort umfassen.

3. Verfahren nach Anspruch 1, wobei das Bestimmen des Zielobjekts, das den Gesichtsmerkmalinformationen entspricht, umfasst:
Durchführen einer Merkmalsidentifizierung an den Gesichtsmerkmalinformationen des Zielobjekts und Identifizieren des den Gesichtsmerkmalinformationen entsprechenden Zielobjekts.

4. Verfahren nach Anspruch 3, ferner umfassend:
nach dem Durchführen der Merkmalsidentifizierung an den Gesichtsmerkmalinformationen des Zielobjekts,
Ausgeben von Aufforderungsinformationen in einem Fall, in dem eine Identität des Zielobjekts, die den Gesichtsmerkmalinformationen entspricht, nicht herausgefunden wird, wobei die Aufforderungsinformationen so eingestellt sind, dass sie dazu auffordern, eine Gesichtsregistrierung und/oder eine Identitätsbindung durchzuführen.

5. Verfahren nach Anspruch 1, wobei das Pushen des zweiten Inhalts zu dem Zielobjekt umfasst:
Pushen des zweiten Inhalts an ein Endgerät, an dem eine Identität des Zielobjekts angemeldet ist.

6. Verfahren nach Anspruch 4, wobei die Identität des Zielobjekts eine Kontonummer ist.

7. Informations-Push-Vorrichtung, umfassend:
ein erstes Empfangsmodul, das dazu ausgelegt ist, Sprachinformationen und Gesichtsmerkmalinformationen eines Zielobjekts zu empfangen;
ein erstes Identifikationsmodul, das dazu ausgelegt ist, einen ersten Inhalt in der Sprachinformation zu identifizieren;
ein erstes Bestimmungsmodul, das dazu ausgelegt ist, das Zielobjekt zu bestimmen, das den Gesichtsmerkmalinformationen entspricht, und einen zweiten Inhalt zu bestimmen, der mit dem ersten Inhalt übereinstimmt;
ein erstes Push-Modul, das dazu ausgelegt ist, den zweiten Inhalt zu dem Zielobjekt zu pushen;
wobei das erste Identifizierungsmodul ferner dazu ausgelegt ist, eine Sprachabdruckverarbeitung der Sprachinformationen durchzuführen;
das erste Bestimmungsmodul beim Bestimmen des Zielobjekts, das den Gesichtsmerkmalinformationen entspricht, ferner dazu ausgelegt ist, ein erstes Zielobjekt zu bestimmen, das den verarbeiteten Sprachabdruckinformationen entspricht, und ein zweites Zielobjekt zu bestimmen, das den Gesichtsmerkmalinformationen entspricht;
das erste Push-Modul, wenn es den zweiten Inhalt an das Zielobjekt pusht, ferner dazu ausgelegt ist, den zweiten Inhalt, der den Sprachinformationen entspricht, an das zweite Zielobjekt in einem Fall zu pushen, in dem das erste Zielobjekt dasselbe wie das zweite Zielobjekt ist.

8. Speichermedium, das ein Computerprogramm speichert, das, wenn es ausgeführt wird, dazu ausgelegt ist, das Verfahren nach einem der Ansprüche 1 bis 7 auszuführen.

9. Computerprogramm, das, wenn es von einem Prozessor (102) einer elektronischen Vorrichtung ausgeführt wird, das Verfahren nach einem der Ansprüche 1 bis 7 durchführt.

## Revendications

1. Procédé d'envoi poussé d'informations, comprenant :
la réception (S202) d'informations vocales et d'informations de caractéristiques faciales d'un objet cible ;
l'identification (S204) d'un premier contenu des informations vocales ;
la détermination (S206) de l'objet cible correspondant aux informations de caractéristiques faciales, et la détermination d'un deuxième contenu cohérent avec le premier contenu ;
l'envoi poussé (S208) du deuxième contenu à l'objet cible ;
comprenant en outre :
après réception des informations vocales et des informations de caractéristiques faciales de l'objet cible,
l'exécution d'un traitement d'empreinte vocale sur les informations vocales, et
lors de la détermination de l'objet cible correspondant aux informations de caractéristiques faciales, comprenant :
la détermination d'un premier objet cible correspondant aux informations d'empreinte vocale traitée ;
la détermination d'un deuxième objet cible correspondant aux informations de caractéristiques faciales ; et
l'envoi poussé du deuxième contenu à l'objet cible comprenant l'envoi poussé du deuxième contenu correspondant aux informations vocales au deuxième objet cible dans un cas dans lequel le premier objet cible est le même que le deuxième objet cible.

2. Procédé selon la revendication 1, dans lequel la réception des informations vocales et des informations de caractéristiques faciales de l'objet cible comprend :
l'acquisition des informations de caractéristiques faciales lors de la réception des informations vocale et la détermination du fait que les informations vocale comprennent au moins un mot de réveil.

3. Procédé selon la revendication 1, dans lequel la détermination de l'objet cible correspondant aux informations de caractéristiques faciales comprend :
l'exécution d'une identification de caractéristique sur les informations de caractéristiques faciale de l'objet cible, et l'identification de objet cible correspondant aux informations de caractéristiques faciales.

4. Procédé selon la revendication 3, comprenant en outre :
après l'exécution de l'identification de caractéristique sur les informations de caractéristiques faciale de l'objet cible,
l'émission d'informations d'invitation dans un cas dans lequel une identité de l'objet cible correspondant aux informations de caractéristiques faciales n'est pas trouvée, les informations d'invitation étant définies pour inviter à effectuer un enregistrement facial et/ou à lier une identité.

5. Procédé selon la revendication 1, dans lequel l'envoi poussé du deuxième contenu à l'objet cible comprend :
l'envoi poussé du deuxième contenu à un terminal sur lequel une identité de l'objet cible est connectée.

6. Procédé selon la revendication 4, dans lequel l'identité de l'objet cible est un numéro de compte.

7. Appareil d'envoi poussé d'informations, comprenant :
un premier module de réception, configuré pour recevoir des informations vocales et des informations de caractéristiques faciales d'un objet cible ;
un premier module d'identification, configuré pour identifier un premier contenu dans les informations vocales ;
un premier module de détermination, configuré pour déterminer l'objet cible correspondant aux informations de caractéristiques faciales, et déterminer un deuxième contenu cohérent avec le premier contenu ;
un premier module d'envoi poussé, configuré pour pousser le deuxième contenu vers l'objet cible ;
le premier module d'identification étant en outre configuré pour exécuter un traitement d'empreinte vocale sur les informations vocales ;
le premier module de détermination, lors de la détermination de l'objet cible correspondant aux informations de caractéristiques faciales, étant en outre configuré pour déterminer un premier objet cible correspondant aux informations d'empreinte vocale traitée, et déterminer un deuxième objet cible correspondant aux informations de caractéristiques faciales ;
le premier module d'envoi poussé, lors de l'envoi poussé du deuxième contenu à l'objet cible, étant en outre configuré pour pousser le deuxième contenu correspondant aux informations vocales vers le deuxième objet cible dans un cas dans lequel le premier objet cible est le même que le deuxième objet cible.

8. Support de stockage stockant un programme informatique qui, lorsqu'il est exécuté, est configuré pour exécuter le procédé selon l'une quelconque des revendications 1 à 7.

9. Programme informatique qui, lorsqu'il est exécuté par le processeur (102) d'un appareil électronique, exécute le procédé selon l'une quelconque des revendications 1 à 7.
